# EUROPEAN PATENT APPLICATION

(11) **EP 2 571 160 A1**
(43) Date of publication of application: **20.03.2013**
(21) Application number: 11181624.5
(22) Date of filing: 16.09.2011
(51) Int. Cl.: H02P 27/04, H02M 7/493

(54) **Drive system for high voltage AC motor**

(71) Applicant: Siemens Aktiengesellschaft, 80333 München (DE)
(72) Inventor: Hansen, Are Johan, 7036 Trondheim (NO); Haugan, Espen, 7052 Trondheim (NO)

(57) **Abstract**

A drive system for driving a high voltage AC motor is provided. The high voltage AC motor is configured to operate at an operating voltage in a high voltage range of about 1.100 V to about 36.000 V. The drive system includes a low voltage variable frequency drive supplying AC voltage in a low voltage range and a step-up transformer coupled between the low voltage variable frequency drive and the high voltage AC motor.

## Description

### Field of the invention

The invention relates to a drive system for driving a high voltage AC motor and to a subsea motor drive system.

### Background

Alternating current (AC) and direct current (DC) motors are known in the art. DC motors run on DC electric power and can be of the brushed or brushless type. While the rotating speed of brushed DC motors is generally adjusted by means of the supplied operating voltage, brushless DC motors require electronics for operation which subsequently activate driving coils, with the frequency in which the driving coils are activated determining the rotational speed of the brushless DC motor. On the other hand, AC motors run on AC electric power, with the rotating speed of for example synchronous AC motors or induction AC motors being controlled by the frequency of the AC supply voltage.

Power sources, e.g. generators, or the power grid generally deliver AC voltages with almost constant frequency. If an AC motor is run on such a power supply, the frequency of the AC supply voltage needs to be adjusted in order to control the speed of the AC motor. For this purpose, variable frequency drives (VFDs) are known in the art which convert the AC electric power supplied with a fixed frequency to AC electric power with adjustable frequency. The VFD enables an operator or control electronics to vary the frequency of the output AC voltage, and thus to change the rotational speed of the connected AC motor. VFDs are thus also called variable speed drives (VSDs).

For some applications, AC motors having high output powers are required. High voltage (HV) electric motors may be used for this purpose. A problem is that variable frequency drives for HV AC motors are rather complex and difficult to implement. In particular, due to the low number of installed units, maintenance for such high voltage VFDs is expansive and spare parts are difficult to obtain.

Another problem arises from the need to install AC motors at larger distances from the power supply, for example several kilometers. Due to the internal resistance of power transmission cables, a voltage drop occurs in dependence on the length of the power transmission cable. This problem arises for example in subsea processing facilities, in which a topside power supply located onshore or on a vessel provides electric energy for an AC motor that is installed subsea. The distance over which the electric power needs to be transmitted can span from 1 to several hundreds of kilometers. The transmission of the electric power over such distances can result in substantial losses.

It is thus desirable to improve the variable speed drives for AC motors. In particular, it is desirable to reduce the complexity and the maintenance costs. It is further desirable to improve the transmission of electric power to the AC motor.

### Summary

Accordingly, there is a need for an improved drive system for an AC motor, and for mitigating at least some of the problems mentioned above.

This need is met by the features of the independent claims. The dependent claims describe embodiments of the invention.

An embodiment of the invention provides a drive system for driving a high voltage AC motor, which is configured to operate at an operating voltage in a high voltage range of about 1.100 V to about 36.000 V. The drive system comprises a low voltage variable frequency drive (VFD) adapted to deliver an output voltage in a low voltage range of about 100 V to about 1.000 V. The low voltage variable frequency drive is configured to supply AC voltage in the low voltage range at a variable frequency. The drive system further comprises a step-up transformer electrically coupled between the low voltage variable frequency drive and the high voltage AC motor. The step up transformer is adapted to convert the AC voltage supplied by the low voltage variable frequency drive in the low voltage range to a voltage in the high voltage range for operating the high voltage AC motor. The drive system is configured such that the high voltage AC motor is operable at variable speed by means of the low voltage variable frequency drive.

As the low voltage variable frequency drive can have a reduced complexity as compared to a high voltage variable frequency drive, the overall complexity of the drive system can be reduced. Furthermore, the low voltage variable frequency drive can be less expensive to implement, and maintenance costs are reduced while the availability of spare parts can be improved. Furthermore, since the AC motor is driven with a voltage in the high voltage range, it is possible to drive the high voltage AC motor even if it is located at larger distances from the step-up transformer of the drive system, as the transmission of electric power in the high voltage range enables larger step-out distances. The transformer output voltage (in particular at the secondary side of the transformer) may be equal or may be higher than the operating voltage of the high voltage AC motor. A voltage drop which may occur in the transmission of the electric power can thus be compensated for.

In an embodiment, the drive system may be a three-phase system, i.e. it may employ a three-phase AC voltage for driving the high voltage AC motor. Accordingly, the low voltage VFD may perform a frequency conversion for each of the different phases (the phase VFD), and the step-up transformer may transform the AC voltage of each phase of the low voltage range to the high voltage range (It may be a three-phase transformer).

In an embodiment, the drive system comprises a filter that is electrically coupled between the low voltage variable frequency drive and the high voltage AC motor. The filter may for example be a sine filter. Such filter may reduce distortions in the VFD output, it may in particular convert the VFD output to a low distortion sine wave. The filter may be coupled to a primary side or a secondary side of the transformer.

In an embodiment, the filter is connected between the low voltage variable frequency drive and the step up transformer. The filter may comprise a filter inductance and a filter capacitor.

The filter may be provided for each phase of a three-phase AC voltage. The filter inductance may be connected in series between the low voltage VFD and the step-up transformer. The filter capacitor may be connected to ground.

In an embodiment, the filter is connected between the step-up transformer and the high voltage AC motor. The filter may comprise a filter capacitor. The filter capacitor may be connected to ground. A filter inductance may not need to be provided, as the inductance of the step-up transformer may be used for filtering purposes. The filter may for example be tuned in accordance with the inductance of the transformer. The configuration of the drive system may thus be simplified.

In an embodiment, the drive system comprises plural of the above mentioned low voltage variable frequency drives. The plural low voltage variable frequency drives may be connected in parallel to supply AC voltage at variable frequency in the low voltage range. As an example, at least 2, 3, 4, 5 or more low voltage VFDs may be provided in the drive system. The electric power that can be supplied to the high voltage AC motor with variable frequency can thus be increased.

Each of the plural low voltage variable frequency drives may be connected to the step-up transformer. The step-up transformer can be configured to perform a voltage conversion for each of the low voltage variable frequency drives. In particular, all low voltage VFDs may connect to a single step-up transformer. High output powers of the drive system with only a single step-up transformer may thus be achieved.

In another embodiment, one step-up transformer may be provided for each of the plural low voltage variable frequency drives. The output of the plural step-up transformers may be connected in parallel to supply the operating voltage in the high voltage range to the high voltage AC motor. In such configuration, the drive system is easily scalable by selecting the number of low voltage VFDs and transformers connected in parallel. In particular, the output power of the drive system may be increased or reduced by adding further VFDs and step-up transformers or removing VFDs and step-up transformers from the system.

The drive system may comprise plural filters, one filter for each of the plural low voltage variable frequency drives. Each filter may be connected between the respective low voltage variable frequency drive and the step-up transformer towards which the low voltage variable frequency drive is coupled. If there is only a single step-up transformer, the output of all the filters may be coupled to this step-up transformer. If for each low voltage VFD, an individual step-up transformer is provided, the filter can be connected between the step-up transformer and the low voltage VFD. As mentioned above, the filter may comprise a filter inductance connected in series between the low voltage VFD and the step-up transformer and a filter capacitor connected to ground.

Other configurations, a single filter connected to the primary or the secondary side of the step-up transformer may be used for all the low voltage VFDs.

The plural low voltage variable frequency drives may be configured to operate in a phase-matched mode in which the phase of the AC voltage supply by each low voltage variable frequency drive is matched to the phase of the AC voltage supplied by the other low voltage variable frequency drives.

As an example, one of the low voltage VFDs may be regarded as a master, and the phase of the output of the other low voltage VFDs may be matched to the phase of the output of this master. In a three-phase AC drive system, the phase-matching may be performed for each phase.

In an embodiment, the output voltage of the low voltage variable frequency drive may lie within a low voltage range of about 300 V to about 700 V. The output voltage may for example be about 400 V, about 600 V or about 690 V.

In an embodiment, the output voltage of the step-up transformer may lie within a voltage range of about 3.000 V to about 36.000 V. The operating voltage of the high voltage AC motor may lie within the same high voltage range. The operating voltage of the high voltage AC motor may for example be 3.300 V, 4.000 V, 6.000 V or 6.600 V. As mentioned above, the output voltage of the step-up transformer may be equal or larger than the operating voltage of the high voltage AC motor, so that a voltage drop in the transmission of the electric power form the step-up transformer to the high voltage AC motor can be accounted for. As an example, the step-up transformer may deliver an output voltage of 8.600 V, and the high voltage AC motor may have a nominal operating voltage of about 6.000 V, with a power transmission cable length between the step-up transformer and the high voltage AC motor in the range between about 5 to 15 kilometers.

A further embodiment of the invention provides a subsea motor drive system comprising a drive system in any of the above mentioned configurations, the drive system being arranged at a topside installation. The subsea motor drive system further comprises a topside power source, e.g. a power supply arranged at the topside installation and adapted to supply an AC voltage in the low voltage range to the low voltage variable frequency drive of the drive system, and a high voltage AC motor adapted to be installed at a subsea installation. An umbilical further provides an electric connection between the output of the step-up transformer at the topside installation and the high voltage AC motor at the subsea installation. The subsea motor drive system is configured such that AC voltage in the high voltage range with variable frequency generated by the drive system is transmitted to the high voltage AC motor via the umbilical, so that by means of the low voltage variable frequency drive at the topside installation, the high voltage AC motor at the subsea installation is operable at variable speed.

As electric power is transmitted from the topside installation via the umbilical e.g. (comprising a power transmission cable) to the high voltage AC motor located at the subsea installation using AC voltage in the high voltage range, the umbilical can have a substantial length, e.g. several kilometers, without resulting high losses and large voltage drops. Furthermore, as the electric power is supplied with variable frequency to the subsea installation, there is no need to relocate a transformer and a variable frequency drive to the subsea installation, which may result in cost savings. Furthermore, since the subsea motor drive system makes use of the low voltage variable frequency drive, advantages similar to the ones outlined further above can be achieved. In particular, the complexity of and the maintenance costs for the low voltage variable frequency drive can be reduced.

In an embodiment, the subsea motor drive system is configured to be capable of operating the high voltage AC motor when the high voltage AC motor is installed at a water depth of less than 100 m, up to 1.000 m, up to 2.000 m or even up to 3.000 m. The subsea motor drive system can in particular be configured to be capable of operating the high voltage AC motor when it is installed in a depth range between about 100 m and about 3.000 m. By transmitting the voltage in the high voltage range with variable frequency via the umbilical to the subsea installation, a reliable operation of the high voltage AC motor even at such depth can be achieved.

The topside installation may be located on a marine vessel, in particular on an offshore platform or on a ship. In other embodiments, the topside installation may be located at an onshore site.

The high voltage AC motor may have an shaft output power in the range of about 0.5 MW to about 10 MW. In particular, the shaft output power may lie in the range between about 1 and about 4 MW, for example at 2.8 MW. The subsea motor drive system may have particular advantages in operating such high power AC motors located at a subsea installation, as the power output of the subsea motor drive system is scalable, in particular as mentioned above by adding further low voltage variable frequency drives and optionally further step-up transformers, and as it enables the transmission of voltage in the high voltage range at variable frequency over considerable distances. The high voltage AC motor can be configured to drive a subsea pump or a subsea compressor.

The high voltage AC motor may for example be a permanent magnet (PM) AC motor, a synchronous AC motor, or an induction AC motor.

The features of the embodiments of the invention mentioned above and those yet to be explained below can be combined with each other unless noted to the contrary.

### Brief description of the drawings

The foregoing and other features and advantages of the invention will become further apparent from the following detailed description read in conjunction with the accompanying drawings. In the drawings, like reference numerals refer to like elements.
Figure 1 is a schematic diagram illustrating a drive system according to an embodiment of the invention.
Figure 2 is a schematic diagram illustrating a drive system according to a further embodiment in which a filter is connected to a secondary side of a step-up transformer.
Figure 3 is a schematic diagram illustrating a drive system according to a further embodiment comprising plural low voltage variable frequency drives.
Figure 4 is a schematic diagram illustrating a drive system according to a further embodiment.
Figure 5 is a schematic diagram illustrating a drive system according to a further embodiment in which a filter is provided for each of plural low voltage variable frequency drives.
Figure 6 is a schematic diagram illustrating a drive system according to a further embodiment in which a step-up transformer is provided for each of plural low voltage variable frequency drives.

### Detailed description

In the following, the embodiments illustrated in the accompanying drawings are described in more detail. It should be clear that the following description is only illustrative and non-restrictive. The drawings are only schematic representations, and elements in the drawings are not necessarily to scale with each other.

Blocks or units shown in the drawings do not necessarily imply that these are to be implemented in a single physical unit, block, circuit, chip or the like, but a single block or unit may be implemented in several physically separate units, while two or more separately illustrated blocks or units may be implemented in a single physical unit.

It should further be noted that the direct coupling between two blocks, units, elements or the like shown in the drawings may also be implemented as an indirect coupling, i.e. a coupling with intervening elements. These may for example be control elements, protective elements such as fuses or circuit breakers, filters or the like.

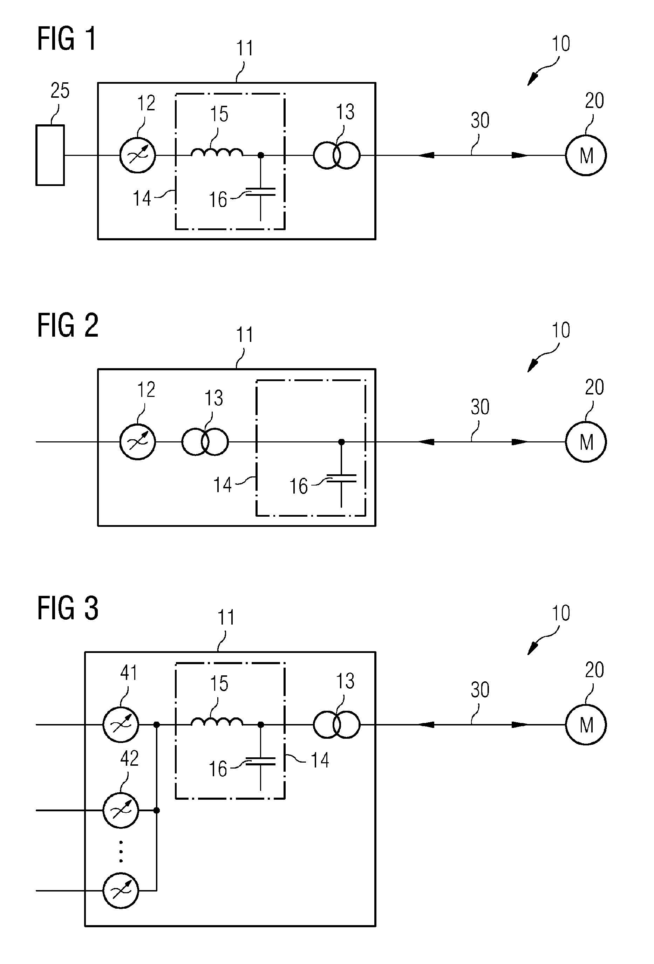

Figure 1 schematically illustrates a subsea motor drive system 10, which comprises a drive system 11, a high voltage AC (alternating current) motor 20 and a power transmission cable or umbilical 30 connecting the drive system 11 to the high voltage AC motor 20. The high voltage AC motor 20 is located at a subsea installation, which can be deployed in a depth of water of less than 100 m, more than 100 m, more than 1.000, 2.000 or even more than 3.000 meters. The drive system 11 is located at a topside installation, for example on board of a marine vessel or at an onshore site. Accordingly, the cable or umbilical 30 can have a considerable length. For a topside installation on a marine vessel, the length may be for example be between about 1 and about 20 km, while for topside installation at an onshore site, the length may reach several tens of kilometers up to hundreds of kilometers (e.g. between 10 and 250 kilometers).

The drive system 11 delivers the supply voltage for operating the high voltage AC motor 20 (in the following termed short "motor"). The speed of motor 20 is determined by the frequency of the AC supply voltage. The drive system 11 allows the frequency of the AC supply voltage to be changed, e.g. by automatic or manual control. Drive system 11 may for this purpose comprise a control module or a user interface (not shown) .

For changing the frequency of the AC supply voltage, the drive system 11 comprises a low voltage variable frequency drive (VFD) 12. Low voltage VFD 12 is essentially a frequency converter which converts an input AC voltage having a fixed frequency into an output AC voltage which has a frequency that can be adjusted by any of the above mentioned means. The low voltage VFD 12 is termed "low voltage" as it converts an input AC voltage in a low voltage range to an output AC voltage in the low voltage range. The low voltage range may be from about 100 V to about 1.000 V AC. Note that the voltage values refer to RMS voltages (root mean square voltages). As an example, the output AC voltage of low voltage VFD 12 may be 400 V, 660 V, 690 V or the like depending on the input AC voltage supplied by the power supply and the particular configuration. The power source 25 is schematically indicated in figure 1, it may for example be a generator, that can be driven by a diesel engine or a gas turbine, or a power grid towards which the drive system 11 is coupled.

The low voltage VFD 12 can be a converter in any known configuration that is suitable for converting a AC voltage at fixed frequency in the low voltage range to an AC voltage with adjustable frequency in the low voltage range. As an example, the low voltage VFD 12 may comprise power electronics, such as IGBTs (insulated gate bipolar transistors), transistors, thyristors or the like. The low voltage VFD can have a rectifier stage which converts the input AC voltage into a DC voltage, a filter for smoothing the DC voltage and an AC stage (inverter) converting the DC voltage into the output AC voltage with adjustable frequency. The rectifier stage may for example comprise a full wave diode bridge. The AC stage may comprise an inverter switching circuit. Inversion may be performed by means of pulse width modulation (PWM). In such configuration, the low voltage VFD 12 can operate efficiently and can produce an output AC voltage having a sufficiently sinusoidal wave form.

The drive system 11 further comprises a step-up transformer 13. Step-up transformer 13 converts the output AC voltage of the low voltage VFD 12 into an AC voltage of a high voltage range. The high voltage may range from about 1.100 V to about 36.000 V. Step-up transformer 13 may have a primary winding and a secondary winding, the low voltage VFD 12 being coupled to the primary winding (low voltage side) and the motor 20 being coupled to the secondary winding (high voltage side). Any type of transformer known in the art that is capable of transforming an AC voltage of the low voltage range to an AC voltage in the high voltage range may be used as step-up transformer 13.

The configuration of step-up transformer 13 is adapted to the particular application, in particular to the type of high voltage motor 20 for which drive system 11 provides the supply voltage. Furthermore, in the configuration of step-up transformer 13, losses that may occur due to the transmission of the electric power on cable or umbilical 30 are considered. As an example, if the high voltage AC motor 20 has an operating voltage of several thousand volts, say about 6.000 V, and the cable or umbilical 30 has a considerable length, e.g. several kilometers leading to a substantial voltage drop, the step-up transformer 13 may be configured to have an output voltage that is larger than the operating voltage of motor 20, e.g. about 8.000 V. The output voltage of step-up transformer 13 is thus larger than the input voltage of motor 20, with the difference being selected in dependence on the type and the length of the cable 30 connecting the drive system 11 to motor 20.

In other configurations, the step-up transformer 13 may be configured to have an output AC voltage in a range of about 3.000 V to about 9.000 V. In particular, it may be configured to have an output AC voltage so that at the motor 20, an input voltage of about 3.300 kV, 4.200 kV, 6.000 kV or 6.600 kV is provided.

The motor 20 can be configured to have an input voltage in any of the above mentioned high voltage ranges, or of any of the above mentioned high voltage values. The nominal shaft power of the motor 20 may lie within a range of about 0.5 MW to about 10 MW. A motor 20 in such configuration may for example be used to drive a pump or a compressor of the subsea installation.

By means of a drive system 11, it is possible to operate the motor 20 at variable speed by means of the low voltage variable frequency drive 12. Since a low voltage VFD is used, the complexity can be reduced as compared to medium or high voltage VFDs. Furthermore, maintenance costs for the low voltage VFD 12 can be reduced, as the availability of service personal and spare parts for low voltage VFDs is much better than for high voltage VFDs. Furthermore, since the electric power is transmitted to motor 20 via cable or umbilical 30 in the high voltage range, the length of cable or umbilical 30 can be increased as compared to a low voltage transmission of the electric power. Since the electric power is transmitted using AC voltage at variable frequency, there is no need to relocate the low voltage VFD 12 or any of the other components of drive system 11 to the ocean floor, i.e. to the subsea installation of which motor 20 forms part. Installation and maintenance costs for the subsea motor drive system 10 can thus be reduced. In addition, no marinization of the components of drive system 11 is necessary, i.e. they do not need to be reengineered for being suitable for subsea use.

Optionally, the drive system 11 can comprise a filter 14. In the example of figure 1, filter 14 is coupled between the low voltage VFD 12 and the step-up transformer 13, in particular to the primary winding of step-up transformer 13. The filter 14 smoothens the shape of the wave form of the output AC voltage of low voltage VFD 12. It may for example be a sine filter, which damps the low voltage VFD switching frequency. The filter 14 may for example be adapted to damp the switching frequency of low voltage VFD 12 by a factor of at least 10, preferably by a factor in a range between about 20 and 60.

In the configuration of figure 1, filter 14 comprises a filter inductance 15 which is connected in series between the low voltage VFD 12 and the step-up transformer 13. It further comprises a filter capacitor 16, one terminal of which is connected between the filter inductance 15 and the step-up transformer 13, and the other terminal of which is connected to ground. This configuration is only a simple example of how filter 14 can be implemented. Other configurations of filter 14 for filtering out the switching frequency of the low voltage VFD 12 are certainly conceivable.

The configuration of the subsea motor drive system 10 and of the drive system 11 can be a single phase configuration, but it is preferably a three-phase configuration, meaning that motor 20 is driven by a three-phase AC voltage. Accordingly, power supply 25 can supply a three-phase AC voltage at fixed frequency, with low frequency VFD 12 generating a three-phase output AC voltage having an adjustable frequency. For this purpose, low voltage VFD 12 may comprise a converter leg for each phase of the AC voltage. It should be clear that in such configuration, filter 14 may be provided for each phase. Further, it should be clear that step-up transformer 13 is in such configuration a three-phase step-up transformer, i.e. transforming the AC voltage in the low voltage range for each phase into a corresponding AC voltage in the high voltage range. Cable or umbilical 30 may accordingly comprise three transmission lines, one for each phase of the AC voltage.

Drive system 11 can be configured for being used in applications other than the subsea motor drive system 10. It may for example be used in an application in which the high voltage AC motor 20 is located at an onshore side, i.e. is not related to a subsea installation. The skilled person will appreciate that many different applications of drive system 11 in which a high voltage AC motor is to be operated are conceivable.

Figure 2 illustrates a modification of the drive system 11 of figure 1. Accordingly, all the explanations given above with respect to figure 1 are equally applicable to the drive system 11 and the subsea motor drive system 10 of figure 2. In the embodiment of figure 2, the filter 14 of drive system 11 is coupled between the step-up transformer 13 and the high voltage AC motor 20, i.e. to the secondary side of step-up transformer 13. In this configuration, the filter 14 only comprises the filter capacitor 16, which is with one terminal connected between the step-up transformer 13 and the motor 20 and with the other terminal connected to ground. Filter 14 further makes use of the inductance of transformer 13 for filtering purposes. In particular, the filter 14 may be tuned so that filtering is achieved by means of the filter capacitor 16 and the inductance of step-up transformer 13. It should be noted that the filter 14 of figure 2 may also comprise a filter inductance, connected in series between step-up transformer 13 and motor 20. Filter 14 may then be tuned so that the inductance of the filter is combined with the inductance of the step-up transformer 13. The filter design may be simplified by the configuration of drive system 11 as illustrated in figure 2.

Figure 3 shows a further embodiment of the drive system 11, which again is a modification of drive system 11 of figure 1. Accordingly, all the explanations given above with respect to figure 1 equally apply to the embodiment of figure 3.

In the embodiment of figure 3, plural low voltage variable frequency drives 41, 42, ... are connected in parallel. This makes it possible to supply higher electric powers to motor 20. The outputs of the plural low voltage VFDs 41, 42, ... are connected together and are connected to the step-up transformer 13. Again, a filter 14 may be provided between the plural parallel connected low voltage VFDs and the step-up transformer 13. The number of low voltage VFDs connected in parallel may be adjusted in accordance with the power requirement of high voltage AC motor 20. The configuration of figure 3 makes it possible to use plural parallel low voltage VFDs with a single filter 14 and a single step-up transformer 13, which reduces the overall complexity of the drive system 11.

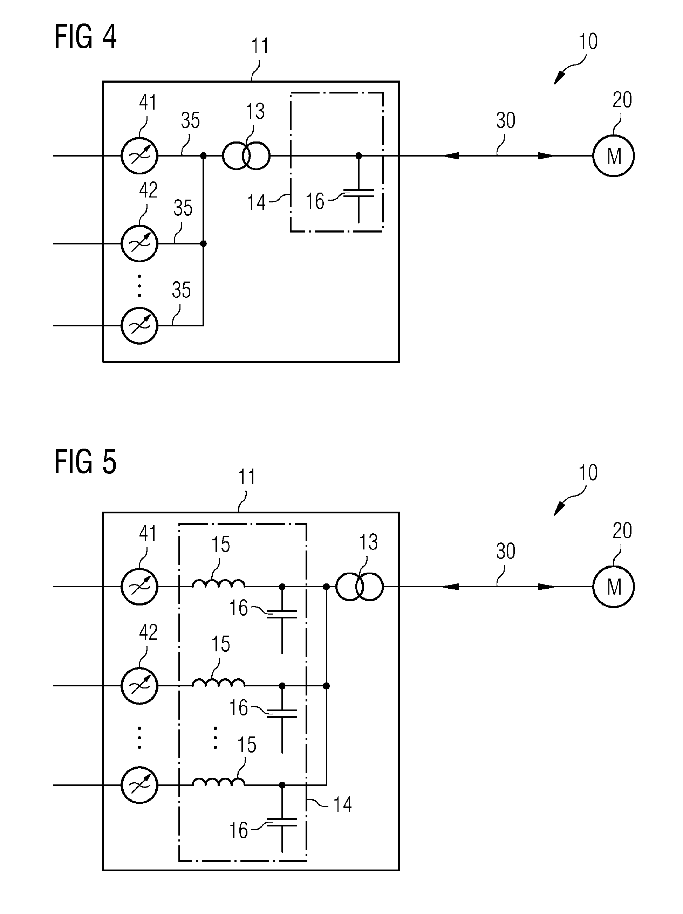

Figure 4 illustrates a further embodiment of drive system 11, which is a modification of drive system 11 of figure 2. Accordingly, the explanations given above with respect to figures 1 and 2 are also applicable to the embodiment of figure 4.

In the embodiment of figure 4, plural low voltage VFDs 41, 42, ... are connected in parallel, with their outputs being connected together and being connected to the primary side of a single step-up transformer 13. As in the configuration of figure 2, the filter 14 is connected between the step-up transformer 13 and the motor 20. Filter 14 may thus again be tuned in accordance with the inductance of step-up transformer 13.

Figure 5 shows a further embodiment of the drive system 11, which is a modification of the embodiments illustrated in figures 3 and 4, so that the explanations given above are also applicable to drive system 11 of figure 5. In the embodiment of figure 5, the filter 14 comprises an individual filter for each low voltage VFD 41, 42, ....In particular, an individual filter is connected between each low voltage VFD and the step-up transformer 13, the output side of the individual filters being connected together and to the primary side of step-up transformer 13. In such configuration, each of the individual filters may be tuned to the particular blow voltage VFD towards which it is coupled.

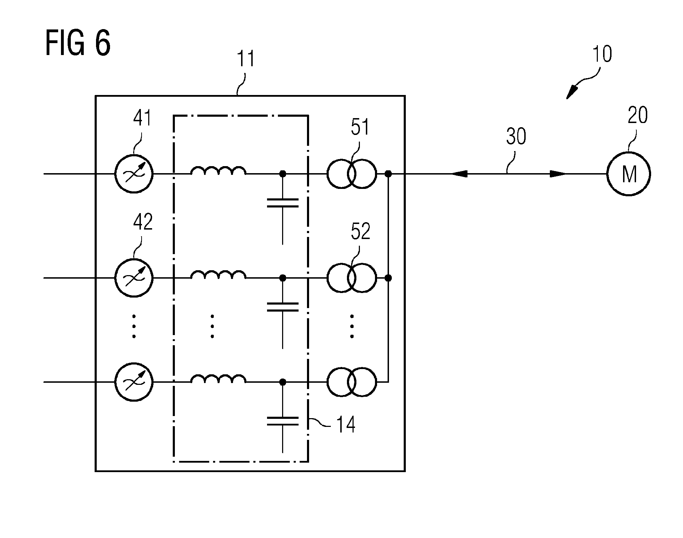

Figure 6 shows a further embodiment of drive system 11, which is a modification of the embodiment illustrated in figure 5. Accordingly, the explanations given further above are equally applicable to the embodiment of figure 6. In the embodiment of figure 6, plural individual step-up transformers 51, 52, ... are provided instead of the single step-up transformer 13, in particular an individual step-up transformer for each of the plural low voltage VFDs 41, 42, .... In this embodiment, the step-up transformers 51, 52, ... can be designed for lower electric powers, which facilitates the design of each of the transformers and reduces the form factor. In particular on a marine vessel, the placement of several small transformers as in the configuration of figure 6 may be preferable to a single large transformer having a substantial weight and size.

In the configuration of figure 6, the secondary sides of the transformers 51, 52, ... are connected together and are connected to the high voltage AC motor 20. Between each low Voltage VFD 41, 42, ... and respective step-up transformer 51, 52, ..., a filter in any of the above described configurations is connected.

Configurations different to the ones illustrated in figures 3 to 6 are certainly conceivable. As an example, in figure 6, the filters may be connected behind (i.e. to the secondary side) of the step-up transformers 51, 52, ..., or a single filter may be used in the connection to the motor 20.

As mentioned above, any of the configurations described above with respect to figures 1 to 6 can be a three-phase configuration, i.e. supplying a three-phase AC voltage to the high Voltage AV motor 20. Each of the low voltage VFDs 41, 42, ... can be implemented as a three-phase VFD. For the purpose of a comprehensive presentation, the power source 25 is not shown in figures 2 to 6, although it is clear that each of the low voltage VFDs is connected to a power source. The low voltage VFDs 41, 42 connected in parallel may be connected to the same power source or to different power sources, with the latter configuration generating redundancy which can be useful in case of a failure of a power source.

As indicated by the dashed lines in figures 3 to 6, the number of low voltage VFDs that are connected in parallel is not limited to a particular value. Two, three, four, five or more low voltage VFDs can be connected in parallel. The number of low voltage VFDs connected in parallel can be determined by the power rating of high voltage AC motor 20 that is to be driven.

The operation of each of the low voltage VFDs connected in parallel in the configurations of figures 3 to 6 can be such that the output AC voltages can be combined easily. In particular, the low voltage VFDs may operate in a phase-matched mode in which the phase of each output AC voltage is matched to the phase of the output AC voltages of the other low voltage VFDs. Such phase-matching may for example be achieved by the system and method described in the document US 7,327,111 B2, which is incorporated herein by reference in its entirety. In a three-phase system, this may certainly be performed for each of the phases of the output AC voltage.

As can be seen, by means of the embodiments described above, it is possible to operate the high voltage AC motor using one or plural low voltage variable frequency drives. By making use of a drive system having several low voltage VFDs connected in parallel, even motors with high power ratings can be driven. At the same time, the configuration of the drive system, and in particular of the individual low voltage VFDs can be kept simple and maintenance costs for the drive system can be reduced. Due to the transmission of electric power using AC voltage in the high voltage range, the drive system and the motor can be located at large distances, e.g. more than 5, 10 or even 100 kilometers, from each other. This makes the drive system particularly useful for subsea applications, in which the motor is part of a subsea installation located at the ocean floor. The drive system can be located at the topside installation and can operate the motor subsea at variable speed.

## Claims

1. A drive system for driving a high voltage AC motor (20) which is configured to operate at an operating voltage in a high voltage range of about 1.100V to about 36.000V, the drive system (11) comprising
- a low voltage variable frequency drive (12) adapted to deliver an output voltage in a low voltage range of about 100V to about 1.000V, the low voltage variable frequency drive (12) being configured to supply AC voltage in the low voltage range at a variable frequency,
- a step up transformer (13) electrically coupled between the low voltage variable frequency drive (12) and the high voltage AC motor (20), the step up transformer being adapted to convert the AC voltage supplied by the low voltage variable frequency drive in the low voltage range to a voltage in the high voltage range for operating the high voltage AC motor (20),
the drive system (11) being configured such that the high voltage AC motor (20) is operable at variable speed by means of the low voltage variable frequency drive (12).

2. The drive system according to claim 1, further comprising a filter (14) electrically coupled between the low voltage variable frequency drive (12) and the high voltage AC motor (20).

3. The drive system according to claim 2, wherein the filter (14) is connected between the low voltage variable frequency drive (12) and the step up transformer (13), the filter preferably comprising a filter inductance (15) and a filter capacitor (16).

4. The drive system according to claim 2, wherein the filter (14) is connected between the step up transformer (13) and the high voltage AC motor (20), the filter (14) preferably comprising a filter capacitor (16).

5. The drive system according to any of the preceding claims, wherein the drive system (10) comprises plural low voltage variable frequency drives (41, 42), wherein the plural low voltage variable frequency drives (41, 42) are connected in parallel to supply AC voltage at variable frequency in the low voltage range.

6. The drive system according to claim 5, wherein each of the plural low voltage variable frequency drives (41, 42) is connected to the step up transformer (13), the step up transformer (13) being configured to perform a voltage conversion for each of the low voltage variable frequency drives (41, 42).

7. The drive system according to claim 5, further comprising plural step up transformers (51, 52), one step up transformer (51, 52) for each of the plural low voltage variable frequency drives (41, 42), the output of the plural step up transformers (51, 52) being connected together to supply the operating voltage in the high voltage range to the high voltage AC motor (20).

8. The drive system according to any of claims 5-7, further comprising plural filters (14), one filter for each of the plural low voltage variable frequency drives (41, 42), each filter being connected between the respective low voltage variable frequency drive (41, 42) and the step up transformer (13, 51, 52) towards which the low voltage variable frequency drive (41, 42) is coupled.

9. The drive system according to any of claims 5-8, wherein the plural low voltage variable frequency drives (41, 42) are configured to operate in a phase matched mode in which the phase of the AC voltage supplied by each low voltage variable frequency drive (41, 42) is matched to the phase of the AC voltage supplied by the other low voltage variable frequency drives (41, 42).

10. The drive system according to any of the preceding claims, wherein the output voltage of the low voltage variable frequency drive (12) lies within the low voltage range of about 300V to about 700V.

11. The drive system according to any of the preceding claims, wherein the output voltage of the step up transformer (13) lies within the high voltage range of about 3.000V to about 36.000V.

12. A subsea motor drive system (10), comprising:
- a drive system (11) according to any of claims 1-11, the drive system being arranged at a topside installation,
- a topside power source (25) arranged at the topside installation and adapted to supply AC voltage in the low voltage range to the low voltage variable frequency drive (12) of the drive system (11),
- a high voltage AC motor (20) adapted to be installed at a subsea installation,
- an umbilical (30) providing an electric connection between the output of the step up transformer (13) at the topside installation and the high voltage AC motor (20) at the subsea installation,
the subsea motor drive system (10) being configured such that AC voltage in the high voltage range with variable frequency generated by the drive system (11) is transmitted to the high voltage AC motor (20) via the umbilical (30), so that by means of the low voltage variable frequency drive (12) at the topside installation, the high voltage AC motor (20) at the subsea installation is operable at variable speed.

13. The subsea motor drive system according to claim 12, wherein the subsea motor drive system (10) is configured to be capable of operating the high voltage AC motor (20) when the high voltage AC motor (20) is installed at a water depth of less than 100 m, up to 1.000m, up to 2.000m or even up to 3.000m.

14. The subsea motor drive system according to claim 12 or 13, wherein the topside installation is located on a marine vessel, in particular an offshore platform or a ship.

15. The subsea motor drive system according to any of claims 12-14, wherein the high voltage AC motor (20) has a shaft output power in the range of about 0.5 MW to about 10 MW.
